Europäisches Patentamt

European Patent Office

Office européen des brevets

(19)

(11) Veröffentlichungsnummer: **0 293 848**

**A2**

(12) **EUROPÄISCHE PATENTANMELDUNG**

(21) Anmeldenummer: **88108733.2**

(22) Anmeldetag: **01.06.88**

(51) Int. Cl.⁴: **H04N 7/00 , H04N 11/08**

(30) Priorität: **04.06.87 DE 3718679**

(43) Veröffentlichungstag der Anmeldung:
**07.12.88 Patentblatt 88/49**

(84) Benannte Vertragsstaaten:
**AT ES FR GB IT SE**

(71) Anmelder: **Interessengemeinschaft für Rundfunkschutzrechte GmbH Schutzrechtsverwertung & Co. KG.
Bahnstrasse 62
D-4000 Düsseldorf 1(DE)**

(72) Erfinder: **Zschunke, Willmut, Prof.Dr.-Ing.
Langgässerweg 29
D-6100 Darmstadt(DE)**
Erfinder: **Wittneben, Armin, Dipl.-Ing.
Heimstättenweg 128
D-6100 Darmstadt(DE)**

(74) Vertreter: **Gornott, Dietmar, Dipl.-Ing.
Zilleweg 29
D-6100 Darmstadt 12(DE)**

(54) **Verfahren zum Übertragen von digitalen Ton/Datensignalen.**

(57) Die Erfindung betrifft ein Verfahren zum Übertragen von Ton/Datensignalen eines ersten digitalen Datenpaketes gemeinsam mit analogen Luminanz- und Chrominanzsignalen im Zeitmultiplex, wobei die Frequenzbandbreite des Datenpaketes geringer ist als die Bandbreite des Luminanz/Chrominanzsignals, bei dem zur Ausnutzung der vollen Übertragungskapazität mit den Ton- und/oder Datensignalen des ersten Datenpaketes weitere Ton- und/oder Datensignale eines zweiten Datenpaketes im Frequenzmultiplexverfahren übertragen werden, deren Frequenzbandbreite annähernd so groß ist wie die Differenz zwischen der Frequenzbandbreite des ersten Datenpaketes und der des Luminanz/Chrominanzsignals.

Fig.1

Xerox Copy Centre

## Verfahren zum Übertragen von digitalen Ton/Datensignalen

Die Erfindung betrifft ein Verfahren zum Übertragen von digitalen Ton/Datensignalen eines ersten Datenpaketes gemeinsam mit analogen Luminanz- und Chrominanzsignalen im Zeitmultiplex, wobei die Frequenzbandbreite des Datenpaketes geringer ist als die Bandbreite des Luminanz/Chrominanzsignal, welches Ton/Datensignal ein duobinärcodiertes sein kann.

Im Rahmen der Festlegung einer einhietlichen europäischen Fernsehnorm für Fernseh-Rundfunksatelliten war zunächst das C-MAC-Paketsystem in Erwägung gezogen worden, das z.B. in der Fachzeitschrift "Rundfunktechnische Mitteilungen", 1/1985, Seiten 23 bis 35, beschrieben ist. Um eine Übertragung in die vorhandenen Kabelkanäle mit einer Bandbreite von 7 MHz zu ermöglichen, haben mehrere Länder, vorrangig Frankreich und Deutschland, beschlossen, das D2-MAC-Paketsystem als neuen europäischen Fernsehstandard einzuführen. Dieses System hat zwar nur die halbe Datenkapazität des C-Systems; aufgrund dieser Halbierung und einer duobinären Codierung entsteht aber ein Basisbandsignal, das sich auch in Kabelanlagen mit herkömmlichen Bandbreiten der Kanäle (7 MHz) übertragen läßt, wenn die Bandbreite des Videosignals gegenüber dem C-MAC-Signal etwas eingeschränkt wird.

Das D2-MAC-Übertragungsverfahren ist in den "Rundfunktechnischen Mitteilungen", Jahrgang 29 (1985), Heft 5, Seiten 229 bis 246 ausführlich beschrieben.

Auf Seite 60, ab Spalte 1, der vorzitierten Beschreibung des D2-MAC-Verfahrens wird positiv herausgestellt, daß die Tatsache, daß das Datensignal die zur Verfügung stehende Übertragungsbandbreite nur zur Hälfte ausnutzt, zur Verbesserung der Empfangsqualität herangezogen werden kann. Konkret ist angeführt, daß die ideale Methode in getrennten Demodulatoren für das Bild und das Ton/Datensignal in einem Fall mit 27 MHz und im anderen Fall mit 14 MHZ Bandbreite bestünde. Damit könnte die Bitfehlerrate entsprechend einer C/N-Erhöhung (Carrier/Noise-Verhältnis) von 3 dB verbessert werden, d.h. der Bitfehlerratenwert $10^{-3}$ sinkt von 8 dB auf 5 dB C/N. Auch bei nur einfachem Fehlerschutz würde der Ton erst nach dem Bild ausfallen.

Beim D 2-MAC-Verfahren über Satellit verzichtete man von vornherein auf die Hälfte der möglichen Übertragungskapazität und nutzte damit den Satellitenkanal nicht optimal aus. Dies führte zu einem Ungleichgewicht zwischen dem Signalspektrum von Video- und Datenanteil.

Ausgehend von dem bekannten Stand der Tecknik liegt der Erfindung die Aufgabe zugrunde, ein Verfahren nach dem Oberbegriff des Anspruchs 1 so zu modifizieren, daß es zur Nutzung der vollen Übertragungskapazität einer breitbandigen Übertragungsstrecke geeignet ist, gleich ob es sich um einen Satellitenkanal mit einer ZF-Bandbreite von 27 MHz oder um einen anderen breitbandigen Übertragungskanal handelt. In Verbindung mit einem D2-MAC-Signal mit duobinärcodierten Datensignalen soll unter Beibehaltung der vollen Empfangseigenschaften des Empfängers für den Empfang eines duobinärcodierten Ton/Datenpaketes und eines analogen Chrominanz/Luminanzsignal, die im Zeitmultiplex übertragen werden, zugleich aber auch die Einspeisung weiterer Informationen in einen weiteren Kabelkanal, z.B. zusätzliche Tonkanäle, oder die Selektion von Signalen zur Steuerung von Kopfstationen ermöglicht werden.

Des weiteren sollen geeignete Schaltungsanordnungen angegeben werden, die zur Durchführung des Verfahrens eingesetzt werden können.

Die Aufgabe wird nach der Erfindung durch das im Anspruch 1 angegebene Verfahren gelöst.

Vorteilhafte Weiterbildungen des Verfahrens sind in den Unteransprüchen 2 bis 6 beschrieben, wobei das Verfahren und die einzelnen Verfahrensschritte vorteilhaft für ein Datensignal z.B. in einem D2-MAC-System unter Anwendung verschiedener Codierungen nach Anspruch 7 eingesetzt werden können.

Das herkömmliche D2-MAC-System kommt für das Ton/Datenpaket mit einer Bandbreite von ca. 5 MHz aus. Damit ist eine Übertragung auch in terrestrischen Netzen ohne Umcodierung möglich. Über den Satellitenkanal kann das Signal jedoch mit einem Modulationshub von 13,5 bzw. 27 MHz übertragen werden, der, ohne das Bild zu beeinflussen, durch das Verfahren nach der Erfindung genutzt werden kann, wobei es zweckmäßig ist, durch Bitratenverdopplung einen zweiten Ton/Datenkanal zu belegen. Versuche haben gezeigt, daß im Grunde eine Tonbandbreite bzw. eine Datenbandbreite von 10 MHz ohne Einschränkung zur Verfügung gestellt werden kann. Um die Kompatiblität zum herkömmlichen D2-Ton beizubehalten, ist es erforderlich, entsprechend der angegebenen erfinderischen Lehre, das zweite Datenpaket im Frequenzmultiplexverfahren, zu übertragen, bezogen auf die D2-MAC-Norm, im Bereich von 5 bis 10 MHz bzw. 11 MHz.

Die Erfindung ist aber nicht nur auf die D2-MAC-Norm beschränkt, sondern kann grundsätzlich dann angewendet werden, wenn die Übertragungskapazität eines Kanals nicht voll ausgeschöpft ist und die digitalen Ton/Datenpakete eine geringere Frequenzbandbreite aufweisen als die restlichen Signalkomponenten des Zeitmultiplexsignals.

Im Anspruch 6 ist eine Schaltungsanordnung für ein D2-MAC-System zur Realisierung der Senderseite mit entsprechend ausgebildeten Modulatoren angegeben. Wie die Schaltungen auf der Empfängerseite günstig realisiert werden können, ist im Anspruch 8 ff. im näheren unter Angabe vorteilhafter Weiterbildungen und Ausgestaltungen beschrieben.

Das Frequenzmultiplexsignal wird auf einfache Weise dadurch erzeugt, daß das Signal des zweiten Datenpaketes mit der Taktfrequenz für die Modulation gemischt und über ein Restseitenbandfilter der Addierschaltung des Senders zugeführt wird, in dem es dem ungemischten duobinärcodierten Signal des ersten Datenpaketes hinzuaddiert wird. Diesem Additionsnetzwerk kann selbstverständlich ein Kompressionsspeicher nachgeschaltet werden, in den die Signale z.B. mit 1,5 MHz eingelesen und im Zeitmultiplextakt mit 10,125 MHz ausgelesen werden. Mit einer ausgewählten Taktfrequenz von ∼ 1,5 MHz wird das NF-Signal bekanntlich duobinär codiert und dann mittels eines - schneller ausgelesenen (10,125 MHz) Speichers zeitlich komprimiert, so daß es im Zeitmultiplex mit den Videosignalen zeilenfrequent übertragen wird.

Nach Anspruch 8 ff. ist ein Tiefpaß vor dem Decoder vorgesehen. Es hat sich gezeigt, daß trotz des Teifpasses Verbreiterungsmaßnahmen bei der Bitwiederholung nicht notwendig sind. Dies wirkt sich u.a. auch positiv im Hinblick auf eine Einfachabtastung aus. Ferner ist durch den zusätzlichen Hochpass im Signalweg des zweiten Ton/Daten-Paketes eine einwandfreie Selektion des frequenzmodulierten Zusatzsignals möglich.

Bei experimentellen Untersuchungen am D2-Codec hat sich gezeigt, daß die Grenzfrequenz des Tiefpasses im Bereich $f_{Bit/2} < fg < f_{Bit}$ ($f_{Bit}$ = Taktfrequenz (10,125 MHz), fg ≤ Grenzfrequenz für die Übertragung) liegen kann, ohne die Bitfehlerrate zu verschlechtern. In diesem Bereich wird die Zunahme des kontinuierlichen Störanteils durch die Abnahme des sog. Klick-Einflusses kompensiert. Unter Klick-Einfluß wird verstanden: Rauschanteile bei geringehm C/N-Faktor, wenn diese als Signale erkannt und ausgewertet werden, was hin zum Prasseln führen kann.

Bei der Festlegung der Träger- und der Taktfrequenz muß, falls diese voneinander abweichen, von verschiedenen Schaltungskonzepten ausgegangen werden. Im einen Fall erfolgt eine Datenkompression bildzugehörig durch eine Kompressionsschaltung, die vor den Coder geschaltet ist. Die Tondaten werden mit einem 1,5 MHz Takt eingelesen und mit einem 10,125 MHz Takt ausgelesen, der zugleich auch die Taktfrequenz ist, die dem Signal im zweiten Tonkanal hinzugemischt wird. Das Signal kann aber auch mit einer Taktfrequenz von 1,5 MHz gemischt und dann in eine Kompressionsspeicherschaltung, die einem Addierer nachgeschaltet ist, eingelesen werden. Der Kompressionsspeicher wird dann mit einer Frequenz von 10,125 MHz zur Erzeugung des aus den Komponenten bestehenden D2-MAC-Signalgemisches ausgelesen. In umgekehrter Weise müssen auch die Empfänger mit den entsprechenden Träger- und Taktfrequenzen arbeiten, damit eine synchrone Wiedergabe des Tons mit dem Bild ermöglicht wird.

Die Vorteile der Erfindung seien nachfolgend zusammengefaßt:

- Bei gleicher Ton/Datenkapazität wie beim C-MAC/Paket sind bei dem System mit einem Frequenzvielfachen während der Zeit des Ton/Daten-Burst keine Kompatibilitätsprobleme in Rundfunkempfangsstellen und somit im D2-MAC-Empfänger gegeben.

- Die Zusatzkapazität kann bei einem D2-MAC-Normsignal auch zur Zuführung von bis zu zwei stereophonen Hörfunkprogrammen zu Rundfunkempfangsstellen genutzt werden; diese können dann codiert oder decodiert in zusätzliche Kabelkanäle auf bekannte Art und Weise eingespeist werden.

- Durch die konsequente Bittaktsynchronität des Zusatzkanals entfällt eine Trägerrückgewinnung im Empfänger.

- Bis auf wenige Komponenten sind Haupt- und Hilfskanal sowohl im Sender als auch im Empfänger identisch.

- Voll kompatibel mit bestehenden Heimempfängern und Kabelkopfstationen.

- Bei der duobinären Codierung wird die auftretende Nullstelle für die Realisierung der zusätzlichen Datenübertragung ausgenutzt. Bekanntlich ist der Frequenzbereich bis zur ersten Nullstelle primär für den Informationsgehalt verantwortlich, daher lassen sich höherfrequente Frequenzanteile mittels eines Tiefpasses abtrennen, ohne die Information merklich zu verfälschen.

- Im Zusatzkanal können Paritätsbits zur Fehlerkorrektur übertragen werden. Damit ist im Empfänger eine noch bessere Ton- und Datenqualität bei - schlechten Empfangsbedingungen zu ereichen.

- Die Umsetzung (Multiplikation mit Träger) kann vorteilhaft mit dem Bittakt mit einem Exklusiv-ODER-Gatter erfolgen, und zwar entweder mit dem kontinuierlichen Bittakt von ca. 1,5 MHz vor der Kompression oder nach der Kompression zum Ton/Daten-Burst mit dem Bittakt von 10,125 MKz. Die in diesem Rechteckträger enthaltenen Oberschwingungen führen zu weit abliegenden, leicht unterdrückbaren

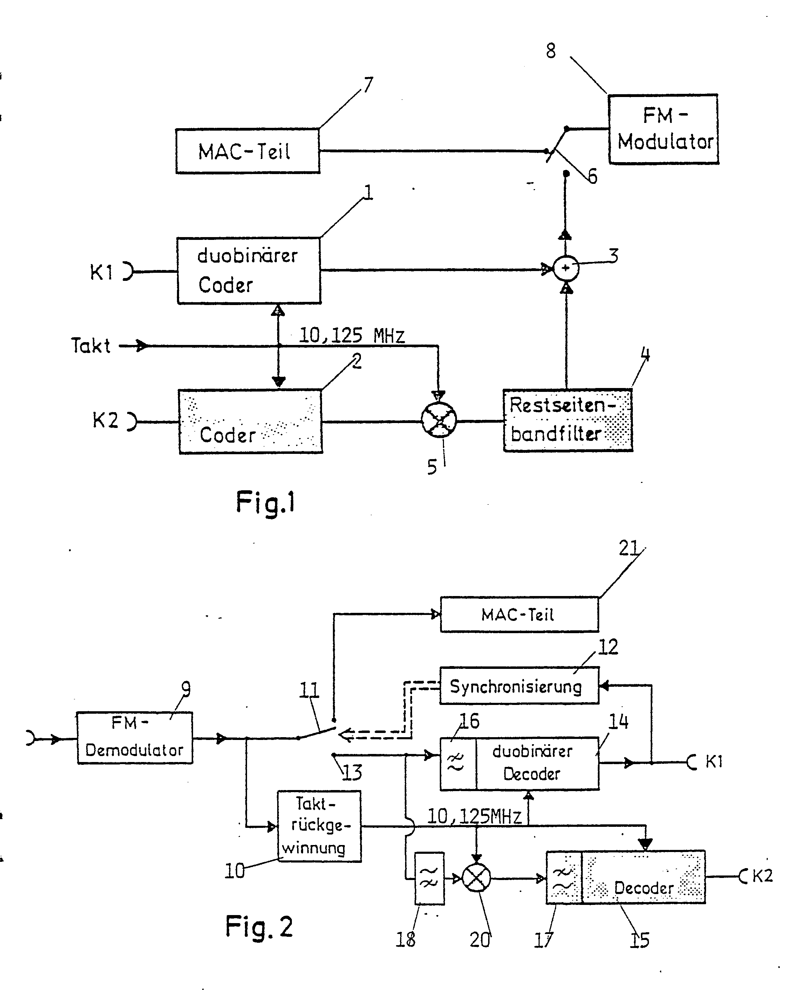

Die Erfindung wird nachfolgend anhand der in den Fig. 1 und 2 dargestellten Blockschaltbilder eines Coders und eines Decoders näher erläutert.

In Fig. 1 ist ein herkömmlicher D2-MAC-Coder mit den für den Zusatzkanal erforderlichen Erweiterungen dargestellt. In dem Blockschaltbild in Fig. 1 sind symbolisch unter K1 der Tonsignaleingang eines Duobinär-Coders 1 und unter K2 der zweite entsprechende Eingang eines weiteren Coders 2, z.B. ein weiterer duobinärcodierender, dargestellt. An diesen liegen z.B. digitale Tonsignale oder Datensignale an. Der Ausgang des ersten duobinären Coders, der von dem Taktgenerator mit einer Taktfrequenz von 10,125 MHz ohne Datenkompression gesteuert wird, ist direkt mit dem einen Eingang eines Addierers 3 verbunden, dessen anderer Eingang mit einem Restseitenbandfilter 4 verbunden ist. Zwischen dem Coder 2 und dem Restseitenbandfilter 4 ist ein Mischer 5 vorgesehen, in welchem das Signal am Ausgang des Coders 2 mit der Taktfrequenz 10,125 MHz gemischt wird. Zur Erzeugung des digitalen Signals wird der Coder 2 ebenfalls vom Takt gesteuert. Der Ausgang des Addierers 3 ist mit dem einen Signaleingang eines elektronischen Schalters 6 verbunden, während der andere Signaleingang mit dem MAC-Coder 7 verbunden ist. Der Schalter wird zeilenfrequent angesteuert und liest im Zeitmultiplex die Luminanz/Chrominanzsignale aus dem MAC-Coder 7 aus und verschachtelt diese zeitlich mit den zugehörigen Daten und Tonsignalen vom Duobinär-Coder 1 bzw. im Fall des Betriebes des zweiten Coders das Signalgemisch vom Addierer 3.

Der Schalter vor dem FM-Modulator 8, über den das Signal dem nicht dargestellten Sender zugeführt wird, symbolisiert gewissermaßen das Zeitmultiplex von Bild- und Datensignal. Durch die vorgenommene Erweiterung durch einen zweiten Duobinär-Coder 2 wird also am MAC-Teil des Signals nichts geändert. Das Datensignal des Zusatzkanals K2 wird durch Trägerung mit dem Bittakt von 10,125 MHz und Restseitenbandfilterung durch den Restseitenbandfilter 4 in dem Frequenzbereich von 5,0625 MHz bis ca. 11 MHz unter Zugrundelegung der D2-MAC-Norm verschoben und kann so problemlos zum Hauptkanal addiert werden. Es handelt sich hierbei nicht um einen im Sinne eines A-Systems (lineare Amplitudenmodulation) digitalen Unterträger sondern um einen solchen, der nur während des Ton/Daten-Burst zur Übertragung des Zusatzsignals hinzugefügt wird. Eine Beeinflussung des Bildes ist daher ausgeschlossen, was ohnehin durch die Zeitmultiplexbildung sichergestellt ist.

Das übertragene FM-modulierte Signal wird mit der in Fig. 2 dargestellten Schaltung empfangen und decodiert. Das von einem nicht dargestellten Tuner und ZF-Verstärker anliegende, von einem FM-Demodulator 9 demodulierte Signal wird einerseits einer Taktrückgewinnungsschaltung 10, z.B. eine PLL-Schaltung oder ein Quadraturdemodulator, und andererseits einem Schalter 11 zugeführt, der über eine Synchronisationsschaltung 12 in Abhängigkeit von aus dem duobinärcodierten Signal rückgewonnenen Synchronsignalen gesteuert getaktet wird. Entsprechend seiner Ansteuerung wird zum einen der MAC-Schaltungsteil 21 des Signals von den übrigen Signalkomponenten getrennt und die übrige Signalkomponente, die die beiden Ton/Datenpakete beinhaltet, über einen zweiten Ausgang 13 zum einen dem Duobinär-Decoder 14 und zum anderen dem zweiten Decoder 15 mittelbar zugeführt. Zur Störabstandsverbesserung ist dem Duobinär-Decoder 14 in jedem Fall ein Tiefpaß 16 vorgeschaltet, der jetzt zusätzlich das frequenzmäßig höherliegende Signal des zweiten Datenpaketes im zweiten Kanal entfernt. Das cos-förmige Basisbandspektrum des duobinären Datensignals mit Nullstelle bei 5,0625 MHz erlaubt eine saubere Abtrennung von Kanal 2 mit einfachen Tiefpässen 16. Das anliegende Signalgemisch über den Eingang 13 wird aber auch einem Hochpaß 18 im zweiten Kanal zugeführt, der verhindert, daß Signalkomponenten des ersten Paketes zur Auswertung in den zweiten Decoder gelangen. Nach der Mischung in einem Mischer 20 mit dem durch Taktrückgewinnung erzeugten Bittakt von 10,125 MHz wird das Datenpaket des zweiten Kanals in gleicher Weise decodiert wie im ersten Kanal und zunächst dem dem zweiten Decoder 15 vorgeschalteten Tiefpaß 17 angelegt, der ebenfalls zur Störabstandsverbesserung vorgesehen ist. Beide Decoder arbeiten mit dem durch die Taktrückgewinnungsschaltung 10 erzeugten, mit dem Takt des Coders identischen Synchronsignal.

Von den Ausgängen der beiden Decoder K1 und K2 sind jeweils gesonderte Ton/Daten-Pakete abgreifbar, die decodiert sind. Während die Signale am Ausgang K1 mit den MAC-Komponenten einem ersten Empfänger, nämlich einem Fernsehempfänger, zugeführt werden können, können die Ausgangssignale am Ausgang des Decoders 15 (K2) weiteren Geräten, z.B. Hörfunkgeräten, zugeführt oder bei Verwendung in einer Satellitenkopfstation in Kabelkanäle eingespeist werden.

## Ansprüche

1. Verfahren zum Übertragen von Ton/Datensignalen eines ersten digitalen Datenpaketes gemeinsam mit analogen Luminanz- und Chrominanzsignalen im Zeitmultiplex, wobei die Frequenzbandbreite des Datenpaketes geringer ist als die Bandbreite des Luminanz/Chrominanzsignals, **dadurch gekennzeichnet,** daß mit den Ton- und/oder Datensignalen des ersten Datenpaketes weitere Ton- und/oder Datensignale eines zweiten Datenpaketes im Frequenzmultiplexverfahren übertragen werden, deren Frequenzbandbreite annähernd so groß ist wie die Differenz zwischen der Frequenzbandbreite des ersten Datenpaketes und der des Luminanz/Chrominanzsignals.

2. Verfahren nach Anspruch 1 mit einem ersten Ton- und/oder Datenpaket mit einer Frequenzbandbreite, die in etwa der halben Frequenzbandbreite des Luminanz/Chrominanzsignals entspricht, gekennzeichnet durch ein zweites Datenpaket, das eine gleich große Bitrate enthält wie der Ton/Datenkanal.

3. Verfahren nach Anspruch 1 oder 2, dadurch gekennzeichnet, daß anstelle zusätzlicher Ton- und/oder Datensignale im zweiten Datenpaket Bits zur Fehlerkorrektur, wie Paritätsbits,· Signalwiederholungen, der Signale des ersten Ton/Datenpaketes übertragen werden.

4. Verfahren nach Anspruch 2 mit einer Frequenzbandbreite des ersten Ton/Datenpaketes von 0 bis 5,0625 MHz, dadurch gekennzeichnet, daß das Ton/Datensignal des zweiten Paketes durch Trägerung mit einem Bittakt von 10,125 MHz und Restseitenbandfilterung in dem Frequenzbereich von 5,0625 MHz bis ca. 11 MHz verschoben und dann dem Signal des ersten Datenpaketes hinzuaddiert wird.

5. Verfahren nach einem der vorhergehenden Ansprüche, dadurch gekennzeichnet, daß nur während des Ton/DatenBurst des zweiten Datenpaketes der digitale restseitenbandmodulierte Träger zur Übertragung dem Signal des zweiten Paketes hinzugefügt wird.

6. Verfahren nach den Ansprüchen 1 bis 3 oder 5, dadurch gekennzeichnet, daß die Umsetzung durch Multiplikation mit dem Träger entweder in einem kontinuierlichen Bittakt von ca. 1,5 MHz bei der Ton/Datencodierung vor der zeitlichen Kompression oder mit einem Bittakt von 10,215 MHz nach der zeitlichen Kompression des Ton/Daten-Burst erfolgt.

7. Verfahren nach einem der vorhergehenden Ansprüche, dadurch gekennzeichnet, daß die Ton/Datensignale beider Pakete duobinärcodiert sind oder andere Codierungen, wie binäre Codierung, aufweisen und für beide Pakete gleich oder voneinander abweichend sind.

8. Schaltungsanordnung zur Durchführung des Verfahrens nach einem der Ansprüche 1 bis 7 mit einem Modulator und einer Zeitmultiplexschaltung zur Erzeugung eines Zeitmultiplexsignals, dadurch gekennzeichnet, daß in an sich bekannter Weise ein erster duobinärer Coder (1) für das erste Ton/Datenpaket und ein zweiter duobinärer Coder (2) für das zweite Ton/Datenpaket vorgesehen sind, und daß die Signale des zweiten Paketes mit einem Träger, der vorzugsweise der Taktfrequenz des Codiertaktes entspricht, gemischt sind, und daß sie über einen Restseitenbandfilter (4) an einer Addierstufe (3) anliegen, in welcher sie den duobinären Signalen des ersten Kanals (K1) hinzuaddiert und über die Zeitmultiplexschaltung (6) nacheinander mit den analogen Videosignalen übertragen werden.

9. Schaltungsanordnung mit einem Empfänger und einem Decoder zur Rückgewinnung der einzelnen Signalkomponenten des ersten Datenpaketes sowie der Videosignalkomponente des nach dem Verfahren übertragenen Zeitmultiplexsignals nach einem der Ansprüche 1 bis 6, dadurch gekennzeichnet, daß dem duobinären Decoder (14) für den ersten Ton/Datenkanal ein Tiefpaß (16) vorgeschaltet ist, der das frequenzmäßig höherliegende Signal des zweiten Datenpaketes eliminiert.

10. Schaltungsanordnung zur Durchführung des Verfahrens nach einem der vorhergehenden Ansprüche mit einem Empfänger und einem Decoder zur Rückgewinnung der Signalkomponenten des zweiten Ton/Datenpaketes des nach dem Verfahren übertragenen Zeitmultiplexsignals, dadurch gekennzeichnet, daß das Signal des zweiten Ton/Datenkanals mittels eines Hochpasses (18) ausgefiltert wird und mit einem Träger gleicher Frequenz wie im Sender gemischt und über einen Tiefpaßfilter (17) dem Decoder (15) zur Decodierung des Signals des zweiten Ton/Datenpaketes zugeführt ist.

11. Schaltungsanordnung nach Anspruch 10, dadurch gekennzeichnet, daß eine Taktrückgewinnungsschaltung, wie Quadraturdemodulator oder PLL, vorgesehen ist, und daß das abgetrennte Signal des zweiten Paketes mit einem Bittakt von 10,125 MHz gemischt und das Mischprodukt von einem nachgeschalteten Decoder decodiert wird, der mit gleicher Frequenz getaktet wird.

12. Schaltungsanordnung nach Anspruch 10 oder 11, dadurch gekennzeichnet, daß die Umsetzung durch Multiplikation des Trägers bei fest vorgegebener Trägerfrequenz und Taktfrequenz über ein Exklusiv-ODER-Gatter erfolgt, welche Träger- oder Taktfrequenz ca. 1,5 MHz vor oder 10,215 MHz nach der zeitlichen Kompression zum Ton/Daten-Burst beträgt.

13. Schaltungsanordnung nach einem der Ansprüche 9 bis 12, dadurch gekennzeichnet, daß ein elektronischer Umschalter im Empfangskanal vorgesehen ist, der von einer Synchronschaltung angesteuert wird, die von den aus dem ersten Datenpaket abgeleiteten Synchronimpulsen synchronisiert wird und das jeweils dem Ton/Datenpaket zugeordnete Chrominanz/Luminanzsignal im Zeitmultiplex an einen MAC-Decoder durchschaltet.

14. Schaltungsanordnung nach einem der Ansprüche 8 bis 13, gekennzeichnet durch die Verwendung in einer Kopfstation einer Übertragungsstrecke zur Eingabe decodierter oder undecodierter Ton/Datensignale der beiden Pakete in gesonderte schmalbandige Kanäle gemeinsam oder unabhängig vom Chrominanz/Luminanzsignal.

15. Schaltungsanordnung nach einem der Ansprüche 8 bis 13, gekennzeichnet durch die Verwendung in einer Satellitenempfangsanlage zur Einspeisung der zusätzlichen Signale in gesonderte Kabelkanäle mit reduzierter Bandbreite (7 bis 8 MHz).

16. Schaltungsanordnung nach einem der Ansprüche 8 bis 13, gekennzeichnet durch die Verwendung in einem Fernsehempfangsgerät.

17. Schaltungsanordnung nach einem der Ansprüche 14, 15 und 16, dadurch gekennzeichnet, daß das empfangene Signal vor der Weiterbearbeitung einem NF-Demodulator und das Ausgangssignal den Decodern zugeführt wird.

Fig.1

Fig. 2